# EUROPEAN PATENT SPECIFICATION

(11) **EP 3 731 382 B1**
(45) Date of publication and mention of the grant of the patent: **07.05.2025**
(21) Application number: 18905845.6
(22) Date of filing: 07.08.2018
(51) Int. Cl.: H02K 7/116, F16H 1/22, A47J 43/08

(54) **ELECTRIC MOTOR AND FOOD PROCESSOR**
ELEKTROMOTOR UND KÜCHENMASCHINE
MOTEUR ÉLECTRIQUE ET ROBOT DE CUISINE

(30) Priority: 11.02.2018 CN 201820250006 U; 11.02.2018 CN 201810140188
(43) Date of publication of application: 28.10.2020
(73) Proprietor: Guangdong Midea Consumer Electric Manufacturing Co., Ltd., Shunde District Foshan, Guangdong 528311 (CN)
(72) Inventor: LIANG, Xiantang, Foshan, Guangdong 528311 (CN); CHEN, Liancheng, Foshan, Guangdong 528311 (CN); PANG, Congshan, Foshan, Guangdong 528311 (CN); YANG, Zhenfeng, Foshan, Guangdong 528311 (CN); YANG, Guangren, Foshan, Guangdong 528311 (CN)
(74) Representative: RGTH
(86) International application number: PCT/CN2018/099243
(87) International publication number: WO 2019/153672

(56) References cited:
- CN-A- 102 758 883
- CN-A- 105 065 637
- CN-A- 105 065 637
- CN-A- 105 498 592
- CN-A- 106 367 312
- CN-A- 106 367 312
- CN-A- 106 732 065
- CN-U- 201 883 428
- CN-U- 204 429 390
- CN-Y- 201 018 351
- CN-Y- 201 368 189
- ES-A1- 2 339 098
- ES-B1- 2 339 098
- JP-A- 2003 206 997
- US-A- 5 407 272
- US-A1- 2015 159 312
- US-A1- 2015 362 043

## Description

### FIELD

The present disclosure relates to the field of household appliances, in particular to an electric motor and a food processor.

### BACKGROUND

As science and technology is developed continuously and people's living standard is improved continuously, food processors with a double-shaft beating function, such as wall breaking machines and soybean milk machines, etc., are applied more and more widely. In such a food processor, an electric motor rotates and drives two shafts arranged concentrically, and two blades in a mixing cup are in a transmission connection with the two shafts respectively, so that the two blades perform beating operation simultaneously.

At present, the electric motor generally employs an external transmission mechanism to rotate and drive the two shafts arranged concentrically. Consequently, when the assembler assembles the food processor, the transmission mechanism may be injured or even damaged easily. Of course, after the food processor is assembled, interference to the transmission assembly may occur owing to loosening of other parts (e.g., electric wires) in the food processor. As a result, the normal operation of the transmission assembly is affected, and the service life of the entire machine is shortened.

CN 106 367 312 A discloses a fermentation tank mixing arrangement with a coaxial double-oar submersible agitator. The submersible motor comprises an inner shaft, an outer shaft, a first bevel gear, a second bevel gear and two sets of blades with opposite mounting directions. The first bevel gear and the second bevel gear are disposed inside the submersible motor, the edge of the rotor inside the submersible motor is provided with two sets of conical teeth respectively with the first bevel gear and the second bevel gear in order to allow different rotation speeds of the inner shaft and the outer shaft. The first bevel gear and the second bevel gear are synchronously rotated by the inner rotor of the submersible motor. Further state of the art is known from CN 105 065 637

A, CN 201018 351 Y, US 2015/159312 A1 and JP 2003 206997 A.

### SUMMARY

To overcome the above-mentioned drawbacks or defects in the prior art, the present disclosure provides an electric motor and a food processor. The electric motor can effectively protect the gear transmission mechanism, is helpful for improving the reliability and service life of the gear transmission mechanism, and thereby improve the reliability and service life of the food processor.

To attain the object described above, the present disclosure provides an electric motor for a food processor, which comprises a front end cover and a rotary output shaft extending out of the front end cover from an inner cavity of the electric motor, wherein the rotary output shaft comprises an inner rotary shaft and an outer rotary shaft that are arranged concentrically, a gear transmission mechanism is further provided inside the inner cavity of the electric motor, and the gear transmission mechanism is in a transmission connection with the inner rotary shaft and the outer rotary shaft respectively.

The gear transmission mechanism comprises a gear bracket and gear transmission components, wherein the gear transmission components are accommodated in an inner cavity of the gear bracket, and the gear bracket is disposed in the inner cavity of the electric motor and fixedly mounted on the front end cover, wherein the inner rotary shaft extends through a bottom wall and a top wall of the gear bracket sequentially and extends out of a top wall of the front end cover, the outer rotary shaft is concentrically fitted outside the inner rotary shaft and extends out of the top wall of the gear bracket and the top wall of the front end cover, the gear transmission components comprise an inner shaft gear and an outer shaft gear that are fixedly fitted around outer circumference walls of the inner rotary shaft and the outer rotary shaft respectively, and the inner shaft gear and the outer shaft gear are in a transmission connection with each other and wherein the gear transmission mechanism comprises an intermediate gear, which is pivotally mounted on a side wall of the gear bracket and engaged with the inner shaft gear and the outer shaft gear respectively, wherein the gear bracket comprises a first half-sectional bracket portion and a second half-section bracket portion that are sectioned along a half section defined by a central axis of the intermediate gear and a concentric axis of the inner rotary shaft and the outer rotary shaft that orthogonally cross each other.

Optionally, the gear bracket is an enclosed cubical bracket.

Optionally, the outer circumference walls of the inner rotary shaft and the outer rotary shaft are respectively provided with an inner bearing pack and an outer bearing pack respectively arranged on the bottom wall and the top wall of the gear bracket, the rotary shaft of the intermediate gear is provided with an intermediate bearing pack mounted on the side wall of the gear bracket.

Optionally, a bottom end of the inner shaft gear abuts against a top end of the inner bearing pack, a top end of the outer shaft gear abuts against a bottom end of the outer bearing pack, and the intermediate gear is engaged with the inner shaft gear and the outer shaft gear respectively.

Optionally, all of the intermediate gear, the inner shaft gear, and the outer shaft gear are cone gears, and the horizontal inclination angles of the cone generatrices of the inner shaft gear and the outer shaft gear are not smaller than 45° and not greater than 60°.

Optionally, the rotation speed ratio of the outer rotary shaft to the inner rotary shaft is not smaller than 1/5 and not greater than 1.

The present disclosure further provides a food processor, which comprises an inner shaft stirring blade assembly, an outer shaft stirring blade assembly, and an electric motor, wherein the inner rotary shaft drives the inner shaft stirring blade assembly to rotate, and the outer shaft stirring blade assembly is in a transmission connection with the outer rotary shaft.

With the above technical scheme, in the electric motor provided in the present disclosure, the inner rotary shaft and the outer rotary shaft, which are arranged concentrically, extend out of the front end cover of the electric motor, the inner rotary shaft and the outer rotary shaft are in a transmission connection via the gear transmission mechanism, and the gear transmission mechanism is accommodated in the inner cavity of the electric motor. Thus, the gear transmission mechanism is integrated in the electric motor, and is effectively protected. As a result, not only a situation of injury or damage to the gear transmission mechanism occurring owing to the carelessness of the assembler can be prevent, but also the interference to the double-shaft transmission assembly can be prevented when other parts (e.g., electric wires) in the food processor get loose. In that way, the reliability and service life of the gear transmission mechanism can be greatly improved, and the reliability and service life of the food processor can be improved.

Other features and advantages of the present disclosure will be further detailed in the detailed description hereunder.

### BRIEF DESCRIPTION OF THE DRAWINGS

The accompanying drawings are provided here to facilitate further understanding on the present disclosure, and constitute a part of this document. They are used in conjunction with the following detailed description to explain the present disclosure, but shall not be comprehended as constituting any limitation to the present disclosure. In the figures:
Fig. 1 is a general sectional view of the electric motor according to a preferred embodiment of the present disclosure;

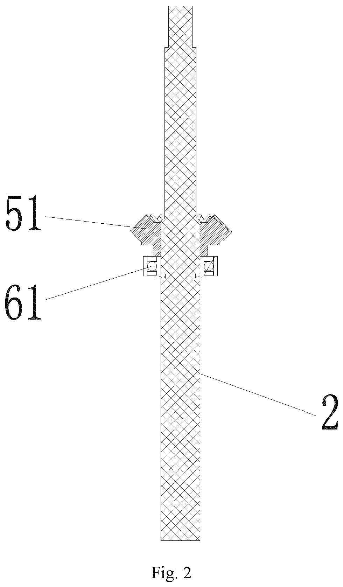

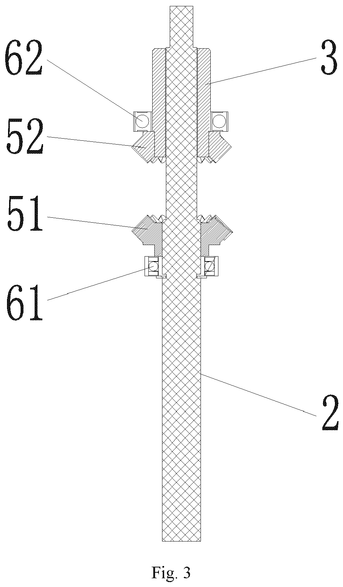

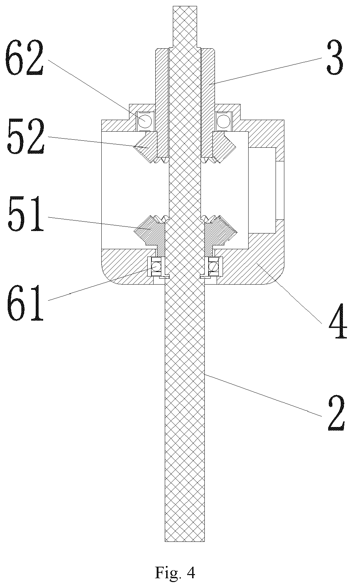

Figs. 2-5 are schematic diagrams illustrating the assembling process of the gear transmission components into the gear bracket, wherein Fig. 2 is a sectional view illustrating the inner shaft gear and the inner bearing pack arranged on the outer circumference wall of the inner rotary shaft, Fig. 3 is a sectional view illustrating the outer rotary shaft with the outer shaft gear and the outer bearing pack fitted outside the inner rotary shaft, Fig. 4 is a sectional view illustrating the assembling of the inner rotary shaft and the outer rotary shaft into the first half-sectional bracket portion, and
Fig. 5 is a sectional view illustrating the assembling of the intermediate gear with the intermediate bearing pack into the first half-sectional bracket portion after the intermediate gear is engaged with the inner shaft gear and the outer shaft gear respectively.

**Reference Numbers**

| | | | |
|---|---|---|---|
| 2 | Inner rotary shaft | 3 | Outer rotary shaft |
| 4 | Gear bracket | | |
| 11 | Front end cover | 12 | Outer stator |
| 13 | Inner rotor | 14 | Back end cover |
| 51 | Inner shaft gear | 52 | Outer shaft gear |
| 53 | Intermediate gear | 61 | Inner bearing pack |
| 62 | Outer bearing pack | 63 | Intermediate bearing pack |

### DETAILED DESCRIPTION

Hereunder some detailed description of the present disclosure will be detailed with reference to the accompanying drawings. It should be understood that the detailed description described here are only provided to describe and explain the present disclosure rather than constitute any limitation to the present disclosure.

It is noted that the examples and the features in the examples in the present disclosure can be combined freely, provided that there is no confliction between them.

In the present disclosure, unless otherwise specified, the words that denote directions or orientations, such as "above", "below", "top", and "bottom", etc., are usually used to describe the relative position relations among the components with respect to the direction as set forth in the accompanying drawings or the vertical, plumb, or gravity direction.

Hereunder the present disclosure will be detailed in examples with reference to the accompanying drawings.

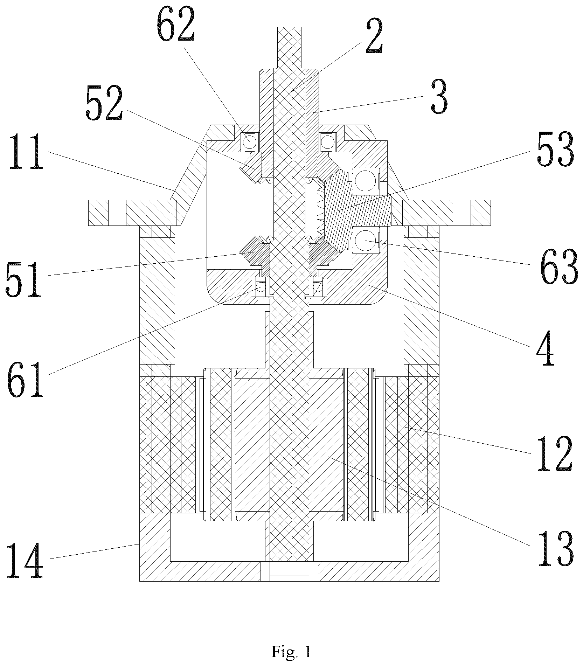

In one aspect, the present disclosure provides an electric motor. As shown in Fig. 1, the electric motor comprises a front end cover 11 and a rotary output shaft extending out of the front end cover 11 from an inner cavity of the electric motor, wherein the rotary output shaft comprises an inner rotary shaft 2 and an outer rotary shaft 3 that are arranged concentrically, a gear transmission mechanism is further provided inside the inner cavity of the electric motor, and the gear transmission mechanism is in a transmission connection with the inner rotary shaft 2 and the outer rotary shaft 3 respectively. Optionally, the rotation speed ratio of the outer rotary shaft 3 to the inner rotary shaft 2 is not smaller than 1/5 and not greater than 1.

In another aspect, the present disclosure provides a food processor. The food processor comprises an inner shaft stirring blade assembly, an outer shaft stirring blade assembly, and an electric motor, wherein the inner rotary shaft 2 drives the inner shaft stirring blade assembly to rotate, and the outer shaft stirring blade assembly is in a transmission connection with the outer rotary shaft 3. Wherein the food processor may be a wall breaking machine, natural juice extractor, juice extractor, soybean milk machine, agitator, or any other household appliance, as long as the food processor is provided with an electric motor and has a food beating function.

In the technical scheme of the present disclosure, the inner rotary shaft 2 and the outer rotary shaft 3 that are arranged concentrically respectively rotate and drive the inner shaft stirring blade assembly and the outer shaft stirring blade assembly, and the inner shaft stirring blade assembly and the outer shaft stirring blade assembly are disposed in the mixing cup of the food processor, the rotor of the electric motor rotates and drives the rotary output shaft to drive the double stirring blade assembly (i.e., the inner shaft stirring blade assembly and the outer shaft stirring blade assembly) to operate simultaneously so as to cut and beat the food accommodated in the mixing cup. Wherein, the double shaft transmission mechanism composed of the inner rotary shaft 2 and the outer rotary shaft 3 in transmission connection is disposed in the inner cavity of the electric motor, i.e., the double shaft transmission mechanism is integrated in the electric motor. Thus, when the assembler assembles the food processor, the double shaft transmission mechanism is protected effectively, and thereby a situation of injury or damage to the double shaft transmission mechanism owing to the carelessness of the assembler can be avoided; in addition, after the food processor is assembled, interference to the double shaft transmission assembly can be effectively prevented when other parts (e.g., electric wires) in the food processor get loose. In that way, not only the reliability and service life of the double shaft transmission mechanism can be improved so as to improve the reliability and service life of the entire machine, but also the yield of the food processor can be effectively improved. Moreover, by integrating the double shaft transmission mechanism in the electric motor, the assembling speed of the assembler can be effectively improved, i.e., the assembler only has to assemble the electric motor integrated with the double shaft transmission mechanism into the food processor, without assembling the double shaft transmission mechanism additionally. Thus, the production efficiency of the food processor can be greatly improved. Of course, by integrating the double shaft transmission mechanism inside the electric motor, an additional internal space for accommodating the double shaft transmission mechanism is omitted in the food processor. That is to say, the internal space occupied in the food processor can be effectively reduced, the entire machine is smaller and more compact; in addition, the transportation and storage cost of the food processor can be reduced since the footprint of the entire machine is reduced.

Specifically, the double shaft transmission mechanism is a gear transmission mechanism. In such an arrangement, the gear transmission mechanism has a more outstanding technical effect than other transmission structures, such as belt-wheel transmission mechanisms. Hereunder the technical effect of the double shaft transmission mechanism serving as a gear transmission mechanism will be described with a belt-wheel transmission mechanism as a comparative example. Specifically, a gear transmission mechanism realizes transmission by means of gear engagement, while a belt-wheel transmission mechanism requires a transmission belt between the wheels to realize transmission. Therefore, compared with a belt-wheel transmission mechanism, a gear transmission mechanism has a smaller and more compact structure since it doesn't require a transmission belt, and thereby the electric motor or even the entire machine is smaller and more compact. Furthermore, the transmission belt in a belt-wheel transmission mechanism gets slack gradually after years of operation, resulting in degradation or even loss of the transmission capability; in contrast, such a situation doesn't occur in a gear transmission mechanism. Therefore, compared with a belt-wheel transmission mechanism, the operation reliability of a gear transmission mechanism is higher, and the service life of a gear transmission mechanism is longer. Of course, since a gear transmission mechanism doesn't require a transmission belt for linkage, the transmission efficiency is higher.

Optionally, the electric motor comprises an inner rotor 13 and an outer stator 12, and the rotary shaft of the inner rotor 13 is the inner rotary shaft 2, as shown in Fig. 1. Therefore, compared with an electric motor with an outer rotor, an electric motor with an inner rotor 13 is smaller and more compact, and occupies a smaller space. Furthermore, the electric motor comprises a back end cover 14 fixed to the back end of the outer stator 12.

Specifically, the gear transmission mechanism comprises a gear bracket 4 and a gear transmission component accommodated in the inner cavity of the gear bracket 4, the gear bracket 4 is disposed in the inner cavity of the electric motor and fixedly mounted on the front end cover 11, as shown in Fig. 1. Thus, by connecting the gear bracket 4 to the front end cover 11 fixedly, the gear bracket 4 and the front end cover 11 forms an integral piece, so that the gear transmission components in the inner cavity of the bracket can carry out transmission smoothly, and thereby the inner rotary shaft 2 can smoothly transfer the rotational kinetic energy to the outer rotary shaft 3 via the gear transmission component. That is to say, the transmission between the inner rotary shaft 2 and the outer rotary shaft 3 is more smooth and stable, and the user experience can be improved. Of course, the smooth and stable transmission of the gear transmission components can effectively reduce the operation noise produced during gear transmission and is helpful for improving user experience. Moreover, since the gear transmission mechanism is accommodated in the inner cavity of the front end cover 11, it doesn't affect the transmission efficiency of the rotor and the stator in the electric motor.

Furthermore, as shown in Fig. 1, the gear bracket 4 is an enclosed cubical bracket. Specifically, to improve the reliability and service life of the gear transmission components, usually a lubricant is applied on the gear transmission components. Therefore, by configuring the gear bracket 4 into an enclosed bracket, interference to other parts in the electric motor owing to dripping or splashing of the lubricant applied on the gear transmission component can be effectively avoided, and the reliability and service life of the electric motor can be improved. Moreover, the gear bracket 4 may be in a spheroidal shape or other shape, besides cubical shape.

The inner rotary shaft 2 extends through a bottom wall and a top wall of the gear bracket 4 sequentially and extends out of a top wall of the front end cover 11, the outer rotary shaft 3 is concentrically fitted outside the inner rotary shaft 2 and extends out of the top wall of the gear bracket 4 and the top wall of the front end cover 11, as shown in Figs. 1-4, the gear transmission components comprise an inner shaft gear 51 and an outer shaft gear 52 that are fixedly fitted around outer circumference walls of the inner rotary shaft 2 and the outer rotary shaft 3 respectively, and the inner shaft gear 51 and the outer shaft gear 52 are in a transmission connection with each other.

Furthermore, the gear transmission mechanism further comprises an intermediate gear 53 as shown in Figs. 1-5, which is pivotally mounted on a side wall of the gear bracket 4 and engaged with the inner shaft gear 51 and the outer shaft gear 52 respectively. In such an arrangement, the outer rotary shaft 3 can rotate in a reverse direction with respect to the inner rotary shaft 2, and thereby the inner shaft stirring blade assembly and the outer shaft stirring blade assembly have rotation directions reversed to each other. Thus, the rotation speeds of the double stirring blade assembly in directions reversed to each other are stacked, and the cutting speed of the double stirring blade assembly with respect to the food particles is greatly increased. Therefore, the food can be cut to a finer state, and the rate of juice extraction from the food and the drinking taste can be improved. In other words, for an electric motor in which the inner rotary shaft 2 and the outer rotary shaft 3 rotate in directions reverse to each other, by greatly decreasing the rotation speed of the rotor 13 in the electric motor (e.g., to 1/2 of the original rotation speed), a food beating and crushing effect can also be attained even when the inner rotary shaft 2 and the outer rotary shaft 3 rotate in the same direction. By decreasing the rotor speed, the food processor can achieve the original food crushing effect while the noise produced during the operation of the main body of the electric motor is reduced. Furthermore, the decreased rotor speed can result in decreased rotation speed of the double stirring blade assembly, and the vibration and noise produced during the food cutting operation of the double stirring blade assembly can be reduced.

Specifically, all of the intermediate gear 53, the inner shaft gear 51, and the outer shaft gear 52 are cone gears. Wherein the intermediate gear 53, the inner shaft gear 51, and the outer shaft gear 52 may be straight-tooth cone gears or skewed-tooth cone gears, or other appropriate cone gears, such as arc-tooth cone gears.

In addition, as shown in Fig. 1, the horizontal inclination angles of the cone generatrices of the inner shaft gear 51 and the outer shaft gear 52 shall not be smaller than 45° and not greater than 60° respectively. Wherein the concentric axis of the inner shaft gear 51 and the outer shaft gear 52 and the central axis of the intermediate gear 53 orthogonally cross each other, and the horizontal inclination angle of the cone generatrix of the inner shaft gear 51, the outer shaft gear 52 or the intermediate gear 53 refers to an acute included angle between the cone generatrix of the gear and the horizontal plane when the gear is placed horizontally (i.e., the central axis of the gear is perpendicular to the horizontal plane). Thus, the sum of the horizontal inclination angle of the cone generatrix of the inner shaft gear 51 or the outer shaft gear 52 and the horizontal inclination angle of the cone generatrix of the intermediate gear 53 shall be 90°. In that way, if the horizontal inclination angles of the cone generatrices of the inner shaft gear 51 and the outer shaft gear 52 are 60° respectively, the horizontal inclination angle of the cone generatrix of the intermediate gear 53 is 30°. Optionally, the horizontal inclination angles of the cone generatrices of the inner shaft gear 51 and the outer shaft gear 52 are 45° respectively. Thus, the inner shaft gear 51, the outer shaft gear 52, and the intermediate gear 53 can be designed to be interchangeable, i.e., the assembler has to mount gears to the positions where gears are to be mounted, without speeding any additional time and effort to artificially judge the types of the gears and the corresponding mounting positions. Furthermore, the horizontal inclination angles of the cone generatrices of the inner shaft gear 51 and the outer shaft gear 52 are greater than 45° and not greater than 60° respectively, i.e., the horizontal inclination angle of the cone generatrix of the intermediate gear 53 is smaller than 45°. Thus, the intermediate gear 53 may be designed to be smaller, and the height of the gear bracket 4 may be designed to be smaller, and thereby the structure of the electric motor can be smaller and more compact. Of course, the space occupied by the electric motor is smaller, the accommodating space of the food processor can be reduced, and thereby the transportation and storage cost of the entire machine can be reduced.

It should be noted that there are a variety of ways to arrange the gear transmission components. For example, the above-mentioned inner shaft gear 51 and outer shaft gear 52 are engaged and carry out transmission via the intermediate gear 53; or an outer gear may be provided on the inner rotary shaft 2, an inner gear may be formed on the bottom end of the outer rotary shaft 3, a connecting gear may be pivotally arranged on the bottom wall of the gear bracket 4 and engaged with the inner gear and the outer gear respectively.

Optionally, the speed ratio of the outer rotary shaft 3 to the inner rotary shaft 2 shall not be smaller than 1/5 and not greater than 1. Thus, the food accommodated in the mixing cup can be cut to a finer state by the double stirring blade assembly, and thereby a better drinking state can be obtained while more juice can be squeezed from the food, and the user experience can be improved greatly. Furthermore, the speed ratio of the outer rotary shaft 3 to the inner rotary shaft 2 shall not be smaller than 1/3 and not greater than 3/4. It can be understood that the higher the speed ratio of the outer rotary shaft 3 to the inner rotary shaft 2 is, the better the food beating and crushing effect of the double stirring blade assembly is; but the speed of impact of the food on the mixing cup body under the driving action of the high-speed double stirring blade assembly will be increased, and thereby the noise produced during the operation of the entire machine will be increased. Therefore, by confining the speed ratio of the outer rotary shaft 3 to the inner rotary shaft 2 to the above-mentioned preferred range, not only a good food beating and crushing effect can be attained, but also the noise during the beating operation can be reduced.

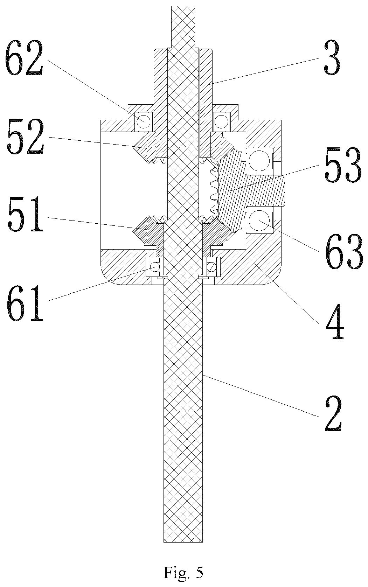

To facilitate the assembler to mount the gear transmission components into the gear bracket 4, as shown in Figs. 1-5, the gear bracket 4 comprises a first half-sectional bracket portion and a second half-section bracket portion that are sectioned along a half section defined by the central axis of the intermediate gear 53 and the concentric axis of the inner rotary shaft 2 and the outer rotary shaft 3 that are orthogonally cross each other. Specifically, the outer rotary shaft 3 with the outer shaft gear 52 is fitted around the inner rotary shaft 2 with the inner shaft gear 51, as shown in Figs. 2 and 3, and then the inner rotary shaft 2 and the outer rotary shaft 3 are mounted to corresponding positions in the first half-sectional bracket portion, as shown in Fig. 4; the intermediate gear 53 is engaged with the outer shaft gear 52 and the inner shaft gear 51 respectively by utilizing an external space, then the intermediate gear 53 is turned around the concentric axis of the outer rotary shaft 3 and the inner rotary shaft 2 that serves as a central axis, and thereby the intermediate gear 53 is mounted to a corresponding position in the first half-sectional bracket portion, as shown in Fig. 5; finally, the second half-section bracket portion and the first half-sectional bracket portion are assembled to form the gear bracket 4. With such a ground-breaking assembling method, the assembler can mount the gear transmission components into the gear bracket 4 easily, and the assembling efficiency is high.

Optionally, the outer circumference walls of the inner rotary shaft 2 and the outer rotary shaft 3 are respectively provided with an inner bearing pack 61 and an outer bearing pack 62 that are respectively arranged on the bottom wall and top wall of the gear bracket 4, the rotary shaft of the intermediate gear 53 is provided with an intermediate bearing pack 63 mounted on the side wall of the gear bracket 4, as shown in Figs. 1 and 5. Thus, by arranging the inner bearing pack 61 between the outer circumference wall of the inner rotary shaft 2 and the gear bracket 4, radial support is provided to the inner rotary shaft 2, the accuracy of rotation of the inner rotary shaft 2 can be improved, and thereby a situation of instable transmission of the inner rotary shaft 2 can be avoided; moreover, in that way, the friction coefficient between the inner rotary shaft 2 and the gear bracket 4 in the process of rotation can be effectively decreased, the inner rotary shaft 2 can rotate smoothly in the gear bracket 4, and the user experience can be improved. Likewise, by arranging the outer bearing pack 62 between the outer circumference wall of the rotating shaft 3 and the gear bracket 4 and arranging the intermediate bearing pack 63 between the outer circumference wall of the rotary shaft of the intermediate gear 53 and the gear bracket 4, the accuracy of rotation of the outer rotary shaft 3 and the rotary shaft of the intermediate gear 53 can be improved, the outer rotary shaft 3 and the rotary shaft of the intermediate gear 53 can rotate smoothly in the gear bracket 4, and thereby the user experience can be improved.

In addition, as shown in Fig. 1, the bottom end of the inner shaft gear 51 abuts against the top end of the inner bearing pack 61, the top end of the outer shaft gear 52 abuts against the bottom end of the outer bearing pack 62, and the intermediate gear 53 is engaged with the inner shaft gear 51 and the outer shaft gear 52 respectively. Thus, a situation of axial displacement (i.e., upward and downward movement) of the outer shaft gear 52 and the inner shaft gear 51 can be effectively prevented during the operation of the electric motor, the transmission stability and reliability of the gear transmission mechanism can be improved, and thereby the reliability of the entire machine can be improved.

It should be noted particularly that the other components and their functions of the electric motor and food processor according to the examples of the present disclosure are well known to those having ordinary skilled in the art, and will not be detailed here to reduce redundancy.

While the present disclosure is described above in some preferred examples, the present disclosure is not limited to those preferred embodiments.

In addition, it should be noted that the specific technical features described in above specific detailed description may be combined within the scope of the invention. To avoid unnecessary repetition, various possible combinations are not described specifically in the present disclosure.

Moreover, different embodiments of the present disclosure may also be combined, as long as the combinations don't deviate from the scope of the present invention, which is defined by the appended claims.

## Claims

1. An electric motor for a food processor, comprising
a front end cover (11);
an output rotary shaft, extending out of the front end cover (11) from an inner cavity of the electric motor, wherein the output rotary shaft comprises an inner rotary shaft (2) and an outer rotary shaft (3) that are arranged concentrically; and
a gear transmission mechanism, provided inside the inner cavity of the electric motor, and the gear transmission mechanism is in a transmission connection with the inner rotary shaft (2) and the outer rotary shaft (3), wherein the gear transmission mechanism comprises a gear bracket (4) and a gear transmission component, and the gear bracket (4) is disposed in the inner cavity of the electric motor and fixedly mounted on the front end cover (11) , the outer rotary shaft (3) is concentrically fitted outside the inner rotary shaft (2) and the top wall of the front end cover (11), the gear transmission component comprises an inner shaft gear (51) and an outer shaft gear (52), the inner shaft gear (51) is fixedly fitted around an outer circumference wall of the inner rotary shaft (2) , and the inner shaft gear (51) and the outer shaft gear (52) are in a transmission connection with each other and,
wherein the gear transmission mechanism comprises an intermediate gear (53), which is pivotally mounted on a side wall of the gear bracket (4) and engaged with the inner shaft gear (51) and the outer shaft gear (52) respectively,
wherein the gear transmission component is accommodated in an inner cavity of the gear bracket (4),
wherein the inner rotary shaft (2) extends through a bottom wall and a top wall of the gear bracket (4) sequentially and extends out of a top wall of the front end cover (11),
wherein the outer rotary shaft (3) extends out of the top wall of the gear bracket (4),
wherein the outer shaft gear (52) is fixedly fitted on an outer circumference wall of the outer rotary shaft (3),
wherein the gear bracket (4) comprises a first half-sectional bracket portion and a second half-section bracket portion that are sectioned along a half section, wherein the half section is defined by a central axis of the intermediate gear (53) and a concentric axis of the inner rotary shaft (2) and the outer rotary shaft (3), wherein the two axes orthogonally cross each other.

2. The electric motor of claim 1, wherein the gear bracket (4) is an enclosed cubical bracket.

3. The electric motor of claim 1 or 2, wherein the outer circumference walls of the inner rotary shaft (2) and the outer rotary shaft (3) are respectively provided with an inner bearing assembly (61) and an outer bearing assembly (62), wherein the inner bearing assembly (61) and the outer bearing assembly (62) are respectively arranged on the bottom wall and the top wall of the gear bracket (4), a rotary shaft of the intermediate gear (53) is provided with an intermediate bearing assembly (63), wherein the intermediate bearing assembly (63) is mounted on the side wall of the gear bracket (4).

4. The electric motor of claim 3, wherein a bottom end of the inner shaft gear (51) abuts against a top end of the inner bearing assembly (61), a top end of the outer shaft gear (52) abuts against a bottom end of the outer bearing assembly (62), and the intermediate gear (53) is engaged with the inner shaft gear (51) and the outer shaft gear (52) respectively.

5. The electric motor of any one of claims 1 to 2, wherein all of the intermediate gear (53), the inner shaft gear (51), and the outer shaft gear (52) are bevel gears, and inclination angles of the cone generatrices of the inner shaft gear (51) and the outer shaft gear (52) are not smaller than 45° and not greater than 60°.

6. The electric motor of any one of claims 1 to 5, wherein a ratio of a rotation speed of the outer rotary shaft (3) to a rotation speed of the inner rotary shaft (2) is not smaller than 1/5 and not greater than 1.

7. A food processor, comprising an inner shaft stirring blade assembly, an outer shaft stirring blade assembly, and the electric motor of any of claims 1-6, wherein the inner rotary shaft (2) drives the inner shaft stirring blade assembly to rotate, and the outer shaft stirring blade assembly is in a transmission connection with the outer rotary shaft (3).

## Patentansprüche

1. Elektromotor für eine Küchenmaschine, umfassend
eine vordere Endabdeckung (11);
eine Abtriebsdrehwelle, die sich aus der vorderen Endabdeckung (11) von einem inneren Hohlraum des Elektromotors aus erstreckt, wobei die Abtriebsdrehwelle eine innere Drehwelle (2) und eine äußere Drehwelle (3) umfasst, die konzentrisch angeordnet sind; und
einen Getriebeübertragungsmechanismus, der innerhalb des inneren Hohlraums des Elektromotors vorgesehen ist, und der Getriebeübertragungsmechanismus steht in einer Übertragungsverbindung mit der inneren Drehwelle (2) und der äußeren Drehwelle (3), wobei der Getriebeübertragungsmechanismus einen Getriebeträger (4) und eine Getriebeübertragungskomponente umfasst, und der Getriebeträger (4) in dem inneren Hohlraum des Elektromotors angeordnet und fest an der vorderen Endabdeckung (11) montiert ist, die äußere Drehwelle (3) konzentrisch außerhalb der inneren Drehwelle (2) und der oberen Wand der vorderen Endabdeckung (11) eingepasst ist, die Getriebeübertragungskomponente ein inneres Wellengetriebe (51) und ein äußeres Wellengetriebe (52) umfasst, das innere Wellengetriebe (51) fest um eine äußere Umfangswand der inneren Drehwelle (2) eingepasst ist, und das innere Wellengetriebe (51) und das äußere Wellengetriebe (52) in einer Übertragungsverbindung miteinander stehen und,
wobei der Getriebeübertragungsmechanismus ein Zwischengetriebe (53) umfasst, das schwenkbar an einer Seitenwand des Getriebeträgers (4) montiert ist und mit dem inneren Wellengetriebe (51) bzw. dem äußeren Wellengetriebe (52) in Eingriff steht
wobei die Getriebeübertragungskomponente in einem inneren Hohlraum des Getriebeträgers (4) aufgenommen ist,
wobei sich die innere Drehwelle (2) durch eine untere Wand und eine obere Wand des Getriebeträgers (4) nacheinander erstreckt und aus einer oberen Wand der vorderen Endabdeckung (11) herausragt,
wobei die äußere Drehwelle (3) sich aus der oberen Wand des Getriebeträgers (4) heraus erstreckt,
wobei das äußere Wellengetriebe (52) fest an einer äußeren Umfangswand der äußeren Drehwelle (3) eingepasst ist
wobei der Getriebeträger (4) einen ersten Halbschnitt-Trägerbereich und einen zweiten Halbschnitt-Trägerbereich umfasst, die entlang eines Halbschnitts unterteilt sind, wobei der Halbschnitt durch eine zentrale Achse des Zwischengetriebes (53) und eine konzentrische Achse der inneren Drehwelle (2) und der äußeren Drehwelle (3) definiert ist, wobei die beiden Achsen einander orthogonal kreuzen.

2. Elektromotor gemäß Anspruch 1, wobei der Getriebeträger (4) ein umschlossener kubischer Träger ist.

3. Elektromotor gemäß Anspruch 1 oder 2, wobei die äußeren Umfangswände der inneren Drehwelle (2) und der äußeren Drehwelle (3) jeweils mit einer inneren Lageranordnung (61) und einer äußeren Lageranordnung (62) versehen sind, wobei die innere Lageranordnung (61) und die äußere Lageranordnung (62) jeweils an der unteren Wand und der oberen Wand des Getriebeträgers (4) angeordnet sind, eine Drehwelle des Zwischengetriebes (53) mit einer Zwischenlageranordnung (63) versehen ist, wobei die Zwischenlageranordnung (63) an der Seitenwand des Getriebeträgers (4) montiert ist.

4. Elektromotor gemäß Anspruch 3, wobei ein unteres Ende des inneren Wellengetriebes (51) an einem oberen Ende der inneren Lageranordnung (61) anliegt, ein oberes Ende des äußeren Wellengetriebes (52) an einem unteren Ende der äußeren Lageranordnung (62) anliegt und das Zwischengetriebe (53) mit dem inneren Wellengetriebe (51) bzw. dem äußeren Wellengetriebe (52) in Eingriff ist.

5. Elektromotor gemäß einem der Ansprüche 1 bis 2, wobei das Zwischengetriebe (53), das innere Wellengetriebe (51) und das äußere Wellengetriebe (52) allesamt Kegelgetriebe sind und die Neigungswinkel der Kegelerzeugnisse des inneren Wellengetriebes (51) und des äußeren Wellengetriebes (52) nicht kleiner als 45° und nicht größer als 60° sind.

6. Elektromotor gemäß einem der Ansprüche 1 bis 5, wobei ein Verhältnis einer Drehzahl der äußeren Drehwelle (3) zu einer Drehzahl der inneren Drehwelle (2) nicht kleiner als 1/5 und nicht größer als 1 ist.

7. Küchenmaschine umfassend eine innere Wellen-Rührflügelanordnung, eine äußere Wellen-Rührflügelanordnung und den Elektromotor gemäß einem der Ansprüche 1 bis 6, wobei die innere Drehwelle (2) die innere Wellen-Rührflügelanordnung zur Drehung antreibt und die äußere Wellen-Rührflügelanordnung in einer Übertragungsverbindung mit der äußeren Drehwelle (3) steht

## Revendications

1. Un moteur électrique pour un robot de cuisine, comprenant
un couvercle d'extrémité avant (11) ;
un arbre rotatif de sortie, s'étendant hors du couvercle d'extrémité avant (11) à partir d'une cavité intérieure du moteur électrique, dans lequel l'arbre rotatif de sortie comprend un arbre rotatif intérieur (2) et un arbre rotatif extérieur (3) qui sont disposés concentriquement ; et
un mécanisme de transmission par engrenage, prévu à l'intérieur de la cavité interne du moteur électrique, et le mécanisme de transmission par engrenage est en liaison de transmission avec l'arbre rotatif interne (2) et l'arbre rotatif externe (3), dans lequel le mécanisme de transmission par engrenage comprend un support d'engrenage (4) et un composant de transmission par engrenage, et le support d'engrenage (4) est disposé dans la cavité interne du moteur électrique et monté de manière fixe sur le couvercle d'extrémité avant (11) , l'arbre rotatif extérieur (3) est monté concentriquement à l'extérieur de l'arbre rotatif intérieur (2) et de la paroi supérieure du couvercle d'extrémité avant (11), le composant de transmission par engrenage comprend un engrenage d'arbre intérieur (51) et un engrenage d'arbre extérieur (52), l'engrenage d'arbre intérieur (51) est monté de manière fixe autour d'une paroi de circonférence extérieure de l'arbre rotatif intérieur (2), et l'engrenage d'arbre intérieur (51) et l'engrenage d'arbre extérieur (52) sont en liaison de transmission l'un avec l'autre, et,
le mécanisme de transmission par engrenage comprend un engrenage intermédiaire (53), qui est monté pivotant sur une paroi latérale du support d'engrenage (4) et engagé avec l'engrenage de l'arbre intérieur (51) et l'engrenage de l'arbre extérieur (52) respectivement, dans lequel le composant de transmission par engrenage est logé dans une cavité intérieure du support d'engrenage (4),
l'arbre rotatif intérieur (2) traverse successivement une paroi inférieure et une paroi supérieure du support d'engrenage (4) et sort d'une paroi supérieure du couvercle d'extrémité avant (11),
dans lequel l'arbre rotatif extérieur (3) sort de la paroi supérieure du support d'engrenage (4),
dans lequel l'engrenage de l'arbre extérieur (52) est fixé sur une paroi de circonférence extérieure de l'arbre rotatif extérieur (3)
dans lequel le support d'engrenage (4) comprend une première partie de support en demi-section et une deuxième partie de support en demi-section qui sont sectionnées le long d'une demi-section, dans laquelle la demi-section est définie par un axe central de l'engrenage intermédiaire (53) et un axe concentrique de l'arbre rotatif intérieur (2) et de l'arbre rotatif extérieur (3), dans lequel les deux axes se croisent orthogonalement.

2. Le moteur électrique de la revendication 1, dans lequel le support d'engrenage (4) est un support cubique fermé.

3. Le moteur électrique de la revendication 1 ou 2, dans lequel les parois de circonférence extérieure de l'arbre rotatif intérieur (2) et de l'arbre rotatif extérieur (3) sont respectivement pourvues d'un ensemble de roulement intérieur (61) et d'un ensemble de roulement extérieur (62), l'ensemble de roulement intérieur (61) et l'ensemble de roulement extérieur (62) étant respectivement disposés sur la paroi inférieure et la paroi supérieure du support d'engrenage (4), un arbre rotatif de l'engrenage intermédiaire (53) étant pourvu d'un ensemble de roulement intermédiaire (63), l'ensemble de roulement intermédiaire (63) étant monté sur la paroi latérale du support d'engrenage (4).

4. Le moteur électrique de la revendication 3, dans lequel une extrémité inférieure de l'engrenage de l'arbre intérieur (51) est en butée contre une extrémité supérieure de l'ensemble de roulement intérieur (61), une extrémité supérieure de l'engrenage de l'arbre extérieur (52) est en butée contre une extrémité inférieure de l'ensemble de roulement extérieur (62), et l'engrenage intermédiaire (53) est en prise avec l'engrenage de l'arbre intérieur (51) et l'engrenage de l'arbre extérieur (52), respectivement.

5. Le moteur électrique de l'une des revendications 1 à 2, dans lequel l'engrenage intermédiaire (53), l'engrenage de l'arbre intérieur (51) et l'engrenage de l'arbre extérieur (52) sont tous des engrenages coniques, et les angles d'inclinaison des génératrices coniques de l'engrenage de l'arbre intérieur (51) et de l'engrenage de l'arbre extérieur (52) ne sont pas inférieurs à 45° et ne sont pas supérieurs à 60°.

6. Le moteur électrique de l'une des revendications 1 à 5, dans lequel un rapport entre la vitesse de rotation de l'arbre rotatif extérieur (3) et la vitesse de rotation de l'arbre rotatif intérieur (2) n'est pas inférieur à 1/5 et n'est pas supérieur à 1.

7. Robot de cuisine comprenant un ensemble de pale d'arbre d'agitation intérieur, un ensemble de pale d'arbre d'agitation extérieur et le moteur électrique de l'une des revendications 1 à 6, dans lequel l'arbre rotatif intérieur (2) entraîne la rotation de l'ensemble de pale d'arbre d'agitation intérieur et l'ensemble de pale d'arbre d'agitation extérieur est en liaison de transmission avec l'arbre rotatif extérieur (3).
